# NEUE EUROPÄISCHE PATENTSCHRIFT

(11) **EP 0 353 751 B2**
(45) Veröffentlichungstag und Bekanntmachung des Hinweises auf die Entscheidung über den Einspruch: **13.05.1998**
(45) Hinweis auf die Patenterteilung: 04.11.1992
(21) Anmeldenummer: 89114353.9
(22) Anmeldetag: 03.08.1989
(51) Int. Cl.: G01G 19/00, G01G 19/393, B08B 3/02, B08B 5/00, F26B 9/00

(54) **Reinigungs- und Trocknungsanlage an einer Kombinationswaage**
Cleaning and drying equipment with a combinational weighing apparatus
Installation de nettoyage et de séchage avec une balance de combinaison

(30) Priorität: 03.08.1988 DE 3826399
(43) Veröffentlichungstag der Anmeldung: 07.02.1990
(73) Patentinhaber: Krämer, Wilhelm Ludwig, 84478 Waldkraiburg (DE)
(72) Erfinder: Krämer, Wilhelm Ludwig, 84478 Waldkraiburg (DE)
(74) Vertreter: Füchsle, Klaus, Dipl.-Ing.

(56) Entgegenhaltungen:
- EP-A- 0 022 879
- EP-A- 0 114 424
- DE-A- 2 639 453
- FR-A- 2 535 161
- GB-A- 2 137 969
- JP-A- 6 211 117
- JP-U- 615 430
- US-A- 4 433 448
- US-A- 4 501 622
- PATENT ABSTRACTS OF JAPAN, Band 11, Nr. 181 (P-585)[2628], 11. Juni 1987; & JP-A-62 11 117 (ISHIDA SCALES MFG CO. LTD) 20-01-1987
- Good Packaging Magazine, April 1983, Seiten 12,13 und April 1986, Seiten 12,13

## Beschreibung

Die Erfindung bezieht sich auf eine Reinigungs und Trocknungsanlage an einer Kombinationswaage, die von einer automatischen Prozeßsteuerung überwacht und gesteuert wird.

Automatische Waagen, insbesondere solche, die automatisch Verpackungsmaschinen mit dem richtigen Portionsgewicht beschicken, werden vorwiegend zum Abwägen von Wägegütern verwendet, die teilweise in und auf den Waagen Rückstände hinterlassen. Nach Abwiegen von Nahrungs- und Genußmitteln auf derartigen Waagen müssen die hinterlassenen Rückstände gründlich entfernt werden. Das sorgfältige Reinigen bedingt, daß die Kombinationswaagen, die aus einer Anzahl von mehreren um einen Trichter kreisförmig oder ähnlich angeordneten Einzelwaagen bestehen, weitgehend demontiert und dann von Hand gereinigt werden müssen, was sehr zeitraubend und arbeitsaufwendig ist. Stets muß Reinigungspersonal, insbesondere nach Ablauf der regulären täglichen Produktionszeit, einsatzbereit gehalten werden.

Aus der GB-A- 2137969 ist eine Reinigungseinrichtung für Wägetrichter einer Kombinationswaage bekannt, die mit Preßluft den Innenraum des Trichters von angehaftetem Wägegut reinigt.

Aus der JP-U-61-5430 ist eine Kombinationswaage bekannt, die von einer automatischen Prozeßsteuerung gesteuert wird. Um bei dieser Kombinationswaage die Gleitfähigkeit des Wägegutes zu erhöhen, wird mit Hilfe von Düsen, die an Stativstangen angebracht sind, Alkohol zusammen mit Druckluft auf die Gleitflächen der Kombinationswaage gesprüht. Da nur geringe Mengen von Alkohol verwendet werden und dieser schnell verdunstet, wird dabei das Wägegut nicht beeinflußt. Ferner findet sich in diesem Stand der Technik ein Hinweis darauf, daß durch eine erhöhte Alkohol zufuhr die beschriebene Vorrichtung zur Verringerung der Gleitreibung auch als eine Art Reinigungseinrichtung verwendet werden kann.

Aus der US-A-4,501,622 ist eine Reinigungsvorrichtung für drehbare Abfüllbehälter bekannt, die mit Hilfe von Hubzylindern und Stellgliedern vertikal verschoben und in Drehung versetzt werden können. Diese bekannte Reinigungseinrichtung verwendet eine in den Behälterinnenraum hineinragende Kugeldüse sowie an der Außenseite des zylindrischen Behälters vorgesehene Düsen, die auf den Hubzylinder sowie auf eine Ventileinrichtung gerichtet sind.

Der Erfindung liegt demgegenüber die Aufgabe zugrunde, eine Kombinationswaage derart zu verbessern, daß die Reinigung der Waage mit großer Sorgfalt sowie mit möglichst wenig Zeit- und Arbeitsaufwand durchgeführt werden kann.

Diese Aufgabe wird gemäß der vorliegenden Erfindung durch eine Reinigungs- und Trocknungsanlage mit den Merkmalen des Anspruchs 1 gelöst. Detaillierte Ausführungsbeispiele sind den Underansprüchen zu entnehmen.

Die Erfindung bezieht sich also auf eine Reinigungs-, und Trockenanlage, die es gestattet, die Kombinationswaage, und/oder eine Wägeprodukt-Zuführeinrichtung, insbesondere in Form einer Schwingförderrine, sowie eine angeschlossene Verpackungsmaschine durch mit Reinigungsmitteln angereichertes kaltes oder warmes Wasser automatisch zu reinigen und durch Kalt- oder Warmluft und/oder Preßluftzu trocknen. Eine solche Anlage kann nach Ablauf der regulären täglichen Produktionszeit oder zwischen Beenden und Wiedereinsetzen des Betriebs der Waage für jeweils unterschiedliche Wägegüter in Betrieb gesetzt werden. Sie setzt sich nach Beenden des Wasch- und Trocknungsvorgangs selbsttätig still. Damit kann bei erheblicher Personaleinsparung ein effektives und hygienisches Reinigen der entsprechend ausgestatteten Waagen such bei problematischen Gütern erzielt werden.

An der Anlage ist mindestens ein dem Aufbringen von Reinigungsflüssigkeit und/oder Trocknungsluft auf die Waage dienender Dreharm angebracht. Um die optimale Reinigung der Waage zu erzielen, besitzt der Dreharm in etwa eine der Außenkontur der Waage entsprechende Form. Dies dient dazu, daß während des Betriebs der Reinigungsanlage die Dreharme eine Art Umhüllung, die der Außenkontur der Waage entspricht, beschreibt.

Erfindungsgemäß kann der Schwenkarm mit einer drehbar angeordneten Schwingförderrinne so gekoppelt sein daß sich beim Wägen stets die Schwingförderrinne in der Mitte über der Waage befindet, während beim Wasch- und Trocknungsvorgang stets der Schwenkarm der Reinigungsanlage mittig über die Waage geschwenkt ist.

Gemäß einer anderen Weiterbildung der Erfindung wird der an dem Schwenkarm angeordnete Dreharm für die Außer-Betrieb-Stellung automatisch durch Sensoren in eine parallele Stellung zum Schwenkarm gebracht. Diese Maßnahme dient dazu, daß beim Wegschwenken des Schwenkarms nach der Außer-Betrieb-Setzung der Reinigungsanlage der Dreharm nicht mit der Waage kollidiert.

Erfindungsgemäß kann der Dreharm einstellbare, zur Waage hin gerichtete Düsen aufweisen. Durch einen oder mehrere Dreharme wird Flüssigkeit, d.h. warmes oder kaltes Wasser, z.B. angereichert mit Reinigungsmittel, durch die einstellbaren Düsen auf die Waage versprüht. Die Düsen können so eingestellt werden, daß eine optimale Reinigung der Waage möglich wird.

Vorzugsweise wird die am Schwenkarm angeordnete Nabe durch einen Getriebemotor angetrieben. Nachdem des weiteren der Dreharm bezüglich seines Verlaufs in etwa der Außenkontur der Waage angepaßt ist, beschreibt der Dreharm aufgrund seiner Drehung um die Nabe während des Reinigungsvorgangs eine Umhüllende um die Waage, wodurch mittels der entsprechend eingestellten Düsen auf alle Stellen der Waage gleich intensiv die Reinigungsflüssigkeit bzw. die Trocknungsluft aufgebracht werden.

Gemäß einer anderen Weiterbildung des erfindungsgemäßen Gedankens ist an der Nabe mindestens ein Dreharm kleineren Querschnitts angebracht, der für die Zuführung von Reinigungsflüssigkeit dient. Des weiteren ist an der Nabe zusätzlich mindestens ein Dreharm größeren Querschnitts angebracht, der für die Zuführung von Trocknungsluft dient.

Gemäß der Erfindung ist im Inneren der Waage mindestens eine Ringdüse angebracht, die die Reinigungsflüssigkeit und/oder die Trocknungsluft von Innen nach außen führt. Damit wird auch dieser von außen schwer zugängliche Bereich der Waage effektiv gereinigt. Weiter kann bei diesem Konzept mindestens eine Ringdüse für die Reinigungsflüssigkeit und eine für die Trocknungsluft vorgesehen werden. Weiterhin kann die Ringdüse gleichzeitig während oder nach Durchführung des Waschvorganges mit den an dem Dreharm versehenen Düsen betrieben werden.

Die an dem Schwenkarm angeordnete Nabe der Reinigungsanlage ist so konstruiert, daß gleichzeitig Reinigungsflüssigkeit in einen Dreharm von kleinerem Querschnitt und Luft in einen anderen Dreharm von größerem Querschnitt geleitet werden kann. Dies bedeutet, daß bei Bedarf Reinigungsflüssigkeit und Trocknungsluft gleichzeitig auf die Waage aufgebracht werden können.

Gemäß einer anderen Weiterbildung der erfindungsgemäßen Anlage kann über der Schwingförderrinne zu deren Reinigung mindestens ein um eine Längsachse drehbarer Rohrdüsenstock für Reinigungsflüssigkeit und/oder Trocknungsluft angebracht werden. Somit werden Rückstände von dieser Wägeprodukt-Zuführeinrichtung entfernt. Der Rohrdüsenstock wird vorzugsweise um ca. 45° schwenkbar angeordnet, so daß eine sorgfältige Reinigung der Schwingförderrinne gewährleistet ist.

Die am Dreharm angeordneten Düsen, die Ringdüsen und der Rohrdüsenstock, sind des weiteren zum Durchblasen von Preßluft ausgelegt. Dies bedeutet, daß nach dem jeweiligen Waschvorgang mittels mit Reinigungsmitteln angereichertem Wasser vor dem jeweiligen Trocknungsvorgang mittels kalter oder heißer Luft die Waschrohrleitungen mit Preßluft wasserfrei geblasen werden, damit während des Wägens ein Nachtropfen von Wasser auf das Wägegut vermieden wird. Des weiteren kann durch diese wasserfrei geblasenen Rohrleitungen noch vor oder während der Einleitung des Trocknungsvorgangs Kalt- oder Heißluft durch die Düsen des Dreharms, die Ringdüsen und den Rohrdüsenstock geblasen werden, um den Trocknungsvorgang zu beschleunigen.

Der Schwenkarm der Reinigungsanlage besteht aus einem Rohr mit Hohlquerschnitt. In diesem Rohr ist eine Heizwendel zum Wärmen der Trockenluft angeordnet. Des weiteren ist ein Ventilator an der Einlaßseite des Schwenkarms vor der Heizwendel angebracht. Dieser Ventilator dient dazu, die warme Trockenluft über die Heizwendel durch die Luftdüsen der Dreharme, den Rohrdüsenstock und die Ringdüsen zu blasen, um die Anlage trocknen.

Die Reinigungsanlage kann mit einer automatisch über die Prozeßsteuerung regulierbaren Flüssigkeitspumpe zur Dosierung des Waschwassers mit flüssigem Reinigungsmittel ausgestattet sein. Dies dient dazu, daß unterschiedlich intensive Waschvorgänge für die verschiedenen Wägegüter erreicht werden können.

Gemäß der Erfindung werden während des Reinigungsvorgangs alle an der Waage angeordneten Vorrats- und Wägebehälter regelmäßig geöffnet und geschlossen. Dadurch wird ein Auffüllen der Behälter mit Waschwasser verhindert und gleichzeitig eine verbesserte Reinigung dieser Behälter gewährleistet.

Es ist von Vorteil, wenn die Prozeßsteuerung mehrere vorprogrammierte Reinigungsprogramme enthält. In der Prozeßsteuerung werden Wasch- und Trocknungsprogramme so abgelegt, daß die je nach Verschmutzungsgrad erforderliche Laufzeit der einzelnen Waschprogrammschritte voreingestellt werden kann und daß für verschiedene Wägeprodukte auf diese abgestellt verschieden intensive Waschprogramme abgerufen werden können.

Gemäß einer anderen Weiterbildung der erfindungsgemäßen Anlage ist diese mit einer weiteren automatisch regulierbaren Wasserpumpe ausgestattet, die den üblichen Wasserdruck der Leitungsnetze auf die gewünschte Stärke erhöht.

Gemäß einer anderen Weiterbildung der erfindungsgemäßen Anlage, wobei zumindest zwei Waagen auf einer gemeinsamen Bühne angeordnet sind, wird die Anlage so beweglich angeordnet, daß sie nacheinander zu den einzelnen Waagen zu deren Reinigung geführt werden kann. Diese Ausführung hat den besonderen Vorteil, daß mehrere Kombinationswaagen mit nur einer Reinigungsanlage nacheinander gewaschen werden können, um Kosten und Raum zu sparen.

Der Schwenkarm kann auf einem von Hand oder automatisch mit einem Motor an einem Bühnengeländer oder am Bühnenboden verschiebbaren Wagen angebracht sein. Die Produktzuführeinrichtungen der jeweiligen Waage werden beim Reinigungsvorgang so weit zurückgezogen, daß der Dreharm in bezug auf die Produktzuführeinrichtungen frei beweglich ist. Durch diese Maßnahme wird verhindert, daß beim Reinigungsvorgang der Dreharm mit der Produktzufuhreinrichtung kollidiert. Um die Reinigung der Produktzuführeinrichtungen der Waagen zu gewährleisten, wird gemäß einer anderen Weiterbildung der Erfindung über den zurückgezogenen Produktzuführeinrichtungen mindestens ein um eine Längsachse drehbarer Rohrdüsenstock für Reinigungsflüssigkeit und/oder Trockenluft angebracht. Des weiteren wird der jeweilige Rohrdüsenstock mit der übrigen Reinigungsanlage betrieblich verbunden.

Das Reinigen mehrerer Waagen mit deren Produktzuführeindchtungen kann so automatisiert werden, daß zum Beispiel bei Betriebsende ein aus Erfahrungswerten stammendes Programm aus Besprühzeit mit Reinigungsflüssigkeit, Druck der Reinigungsflüssigkeit und damit Reinigungsflüssigkeitsmenge, Dosierung an Wasch- und Desinfektionsmittel in das beheizte Waschwasser, Restwasser-Auspreßzeit aus dem Leitungssystem und Trockenzeit mit Einstellbarkeit der Trockenlufttemperatur eingestellt werden kann. Je nach Verschmutzungsgrad können beliebig viele Reinigungsprogramme mit variablen Daten für den Waschvorgang eingegeben werden. Nach Reinigung der letzten Waage auf diese Weise setzt sich die Reinigungsanlage außer Betrieb, so daß bei Produktionsbeginn mit automatisch gereinigten und getrockneten Waagen wieder gearbeitet werden kann.

Der Erfindungsgegenstand wird nachfolgend anhand von in den Zeichnungen dargestellten Ausführungsbeispielen näher erläutert. Es zeigt:
Fig. 1 eine schematisch dargestellte Seitenansicht einer erfindungsgemäßen Waage mit daran angeordneter Reinigungsanlage und
Fig. 2 eine schematisch dargestellte Draufsicht einer erfindungsgemäßen Waage mit angeordneter Reinigungsanlage und Produkt-Zuführeinrichtung.
Fig. 3 eine schematisch dargestellte Seitenansicht einer von mehreren hintereinanderangeordneten Waagen mit erfindungsgemäßer, beweglicher Reinigungsanlage und Produktzuführeinrichtung, und
Fig. 4 eine schematisch dargestellte Draufsicht der Anordnung gemäß Fig. 3.

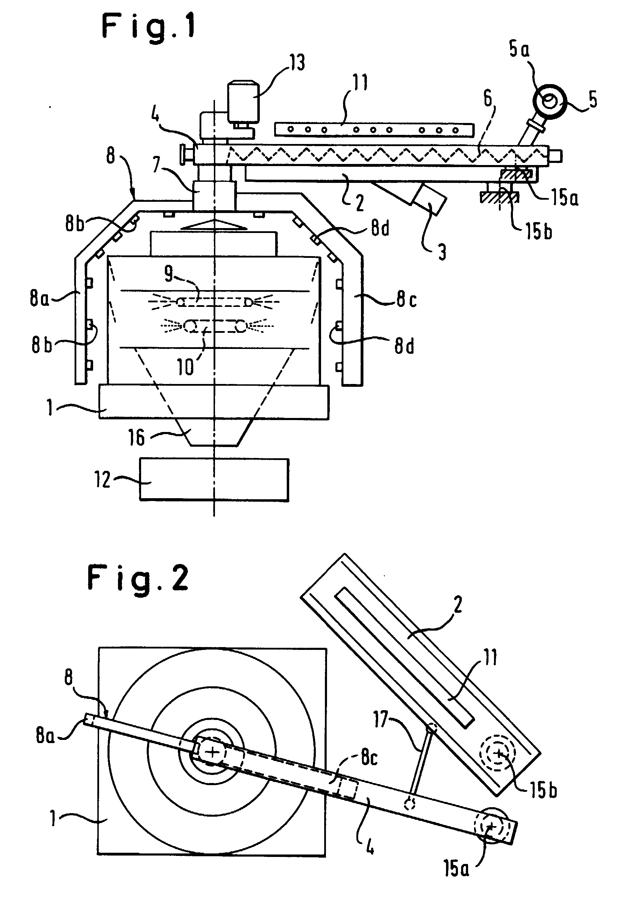

In Fig. 1 ist ein Ausführungsbeispiel einer Waage 1 mit der erfindungsgemäßen Reinigungsanlage gezeigt. Eine Produkt-Zuführeinrichtung, z.B. eine Schwingförderrinne 2, zur Beschickung der Waage 1 mit Wägegut ist mit einem Schwingantrieb 3 versehen. Die Schwingförderrinne 2 wird um den mit der Bezugsziffer 15b bezeichneten Drehpunkt über die Waage geschwenkt.

Ein Schwenkarm 4 kann um einen weiteren Drehpunkt 15a horizontal oberhalb der Waage gedreht werden. Der Schwenkarm 4 besteht aus einem Rohr mit Hohlquerschnitt. An der Einlaßseite des Schwenkarms 4 ist ein Ventilator 5 angebracht, an dem ein Lufteintritt 5a angeordnet ist. Der Ventilator 5 dient dazu, die Luft, die zum Trocknen verwendet wird, durch den Schwenkarm zu den weiteren luftführenden Teilen der Reinigungsanlage zu blasen. In dem Schwenkarm 4 ist eine Heizwendel 6 angeordnet, die dazu dient, die von dem Ventilator durch den Schwenkarm geblasene Luft wahlweise zu erwärmen.

Am Schwenkarm 4 ist eine vertikal stehende, um sich selbst drehende Nabe angeordnet, die so konstruiert ist, daß gleichzeitig Reinigungsflüssigkeit und Trockenluft/Preßluft durch diese geleitet werden kann. Die Nabe wird vorzugsweise durch einen Getriebemotor 13 angetrieben.

Zum Aufbringen von Reinigungsflüssigkeit und/oder Trocknungsluft auf die Waage 1 sind Dreharme 8a und 8c an der Nabe 7 angebracht. Wie Fig. 1 zeigt, sind ein Dreharm 8a kleineren Querschnitts zur Zuführung von Reinigungsflüssigkeit sowie ein Dreharm 8c größeren Querschnitts zur Zuführung von Trocknungsluft an der Nabe 7 vorgesehen. Am Dreharm 8a sind Düsen 8b und am Dreharm 8c Düsen 8d angeordnet. Die Düsen 8b und 8d sind beliebig einstellbar, so daß die optimale Zuführung von Reinigungsflüssigkeit bzw. Trockenluft oder Preßluft auf die Waage 1 erfolgt.

Am Schwenkarm 4 ist über die Nabe 7 ein Getriebemotor 13 angeordnet, der die Nabe um eine vertikale Achse dreht. An dem Ende des Schwenkarms 4, an dem die Nabe 7 angeordnet ist, ist des weiteren ein Wasch- , Klarspülwasser und Preßlufteintritt angebracht, über den die Reinigungsflüssigkeit und die Preßluft durch die Nabe 7 zu den Dreharmen 8a und 8c zugeführt werden.

Im Inneren der Waage 1 sind eine Ringdüse 9 für Wasch-, Klarspülwasser und Preßluft sowie unterhalb dieser Ringdüse 9 eine weitere Ringdüse 10 für Trockenluft angebracht. Über die Ringdüsen 9 und 10 wird die Reinigungsflüssigkeit bzw. Trocknungsluft von innen nach außen gesprüht bzw. geblasen, so daß auch eine Reinigung der Waage 1 von innen erfolgt.

Um auch eine Reinigung der schon erwähnten Schwingförderrinne 2 zu gewährleisten, ist ein Rohrdüsenstock 11 oberhalb der Rinne 2 angeordnet. Der Rohrdüsenstock 11 ist zur Zuführung von Wasch- , Klarspülwasser, Trocknungsluft und zum Durchblasen von Preßluft ausgelegt. Er ist so angeordnet, daß er um ca. 45° schwenkbar ist, um an die Form der Schwingförderrinne 2 angepaßt zu sein und somit die Reinigung der Rinne zu optimieren.

Unterhalb der Waage 1 ist in Fig. 1 eine Verpackungsmaschine 12 schematisch dargestellt. Die Reinigung der Verpackungsmaschine 12 erfolgt z.B. dadurch, daß das auf die Waage 1 und die Schwingförderrinne 2 gesprühte Wasch- oder Klarspülwasser durch einen Abgabetrichter 16 der Waage 1 auf die Verpackungsmaschine 12 fließt und somit eine Reinigung der Verpackungsmaschine 12 herbeiführt. Natürlich kann für die Verpackungsmaschine 12 auch noch eine separate Reinigungsanlage vorgesehen sein.

Fig. 2 stellt eine Draufsicht auf die Waage 1 mit dem daran angeordneten Schwenkarm 4 und der Schwingförderrinne 2 dar. Sie zeigt die Außer-Betrieb-Stellung der Reinigungsanlage, wobei der Schwenkarm 4 mittig über der Waage 1 angeordnet ist. Der an dem Schwenkarm 4 angeordnete Dreharm 8 steht parallel zum Schwenkarm 4. Der Dreharm 8 wird in diese parallele Stellung automatisch durch Sensoren gebracht, so daß er beim Schwenken der Reinigungsanlage über der Waage 1 hinweg nicht mit der Waage 1 kollidiert. Die Schwingförderrinne 2 und der Schwenkarm 4 sind mit einem Kopplungsarm 17 miteinander verbunden. Dieser Kopplungsarm 17 dient dazu, daß beim Schwenken des Schwenkarms 4 bzw. der Schwingförderrinne 2 um den Drehpunkt 15a bzw. 15b das jeweilige Gerät mittig über der Waage 1 positioniert wird.

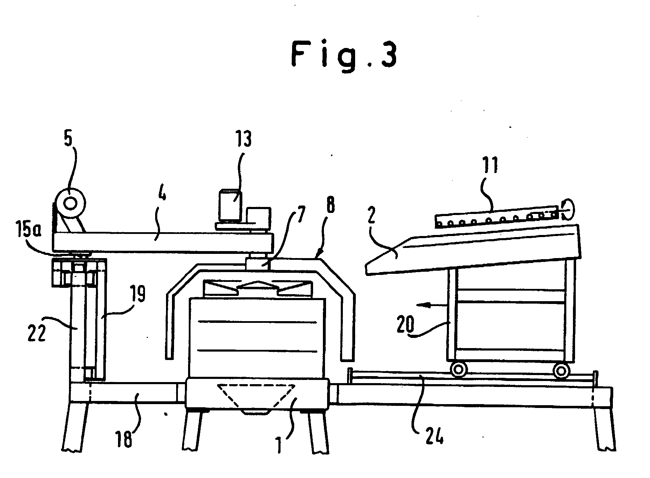

Fig. 3 zeigt in Seitenansicht eine von mehreren Waagen 1, die nacheinander auf einer gemeinsamen Bühne 18 angeordnet sind. Der Schwenkarm 4 ist mit seinem Drehpunkt 15a auf einen von Hand oder automatisch, zum Beispiel mit einem Motor, am Bühnengeländer 22 verschiebbaren Wagen 19 montiert. Da jede dieser Kombinationswaagen 1 eine Produkt:zuführeinrichtung bzw. Schwingförderrinne 2 benötigt, wird diese auf einen Wagen 20 montiert, so daß sie zur Waage 1 hin- und von dieser weg bewegbar ist. Beim Reinigungsvorgang wird die Schwingförderrinne 2 so weit zurückgezogen, daß sich der am Schwenkarm 4 angeordnete Dreharm 8 um die Waage 1 frei bewegen kann, um diese zu reinigen. Oberhalb der Schwingförderrinne 2 ist ein um ca. 45° um seine Längsachse schwenkbarer Rohrdüsenstock 11 zur Reinigung und Trocknung der Schwingförderrinne angebracht. Beim Reinigungsvorgang wird die Schwingförderrinne 2 vorzugsweise mit der übrigen Reinigungsanlage automatisch in Betrieb gesetzt, obwohl der Rohrdüsenstock 11 zur Reinigung der Schwingförderrinne 2 getrennt von der Waschanlage der Waage 1 in Betrieb gesetzt und gesteuert werden kann.

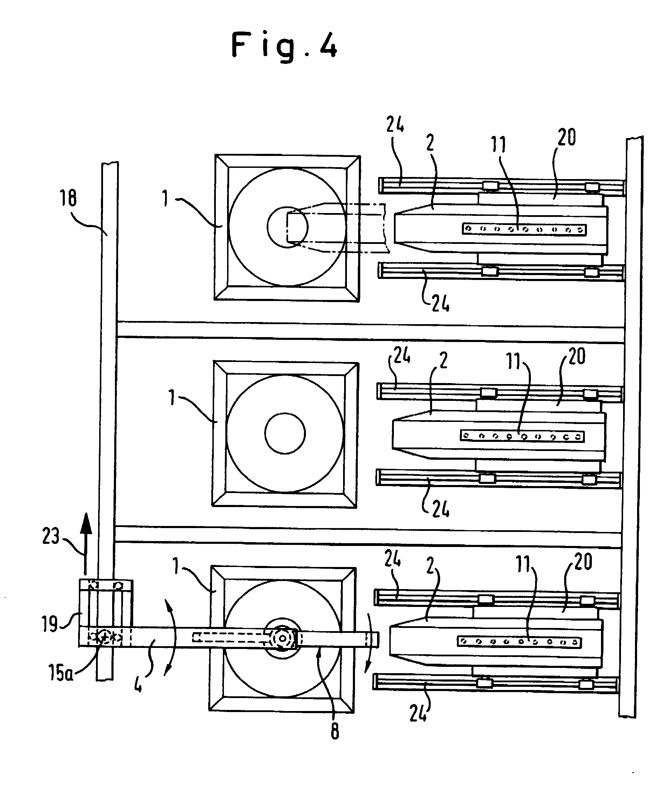

In Fig. 4 sind mehrere, auf der Bühne 18 hintereinander angeordnete Waagen 1 und zugehörige, auf der Waage 1 hin- und von dieser wegbewegbare Schwingförderrinnen 2 in Draufsicht dargestellt. Die Gestaltung der Bühne 18 und die Anordnung der Waagen 1 auf der Bühne sind so ausgeführt, daß sich der den Schwenkarm 4 tragende Wagen 19 von einer Waage zur nächsten in Richtung des Pfeils 23 bewegen kann. Die die Schwingförderrinnen 2 tragenden Wagen 20 werden an Schienen 24 oder dergleichen so geführt, daß sich bei der Reinigung einer Waage 1 der entsprechende Wagen 20 von dieser weg und auf diese zu bewegen kann, um eine freie Bewegung des an dem Schwenkarm 4 angeordneten Dreharms 8 zu gewährleisten.

## Patentansprüche

1. Reinigungs- und Trocknungsanlage an einer Kombinationswaage, welche Kombinationswaage von einer automatischen Prozeßsteuerung überwachbar und steuerbar ist, wobei
- die Reinigungs- und Trocknungsanlage einen in etwa die Form der Außenkontur der Waage (1) entsprechenden und an einem in einer horizontalen Ebene schwenkbaren Schwenkarm angeordneten Dreharm (8) aufweist, durch den Reinigungsflüssigkeit und/oder Trocknungsluft auf die Waage aufgebracht werden;
- im Inneren der Waage (1) mindestens eine Ringdüse (9, 10) angebracht ist, die Reinigungsflüssigkeit und/oder Trocknungsluft von innen nach außen führt;
- die Reinigungs- und Trocknungsanlage mit Hilfe der automatischen Prozeßsteuerung nach Ablauf der regulären täglichen Produktionszeit oder zwischen Beenden und Wiedereinsetzen des Betriebs der Kombinationswaage (1) steuerbar ist; und
- die Prozeßsteuerung der Waage (1) ein Programm enthält, mit dem während des Reinigungsvorgangs alle an der Waage (1) angeordneten Vorrats- und Wägebehälter regelmäßig geöffnet und geschlossen werden.

2. Anlage nach Anspruch 1, dadurch gekennzeichnet, daß die Waage (1) einer Produktzuführeinrichtung (2), insbesondere einer Schwingförderrinne, und/oder einer Verpackungsmaschine (12) zugeordnet ist, und die Anlage zur gleichzeitigen Reinigung der Produktzufuhreinrichtung (2) und/oder der Verpackungsmaschine (12) ausgelegt ist.

3. Anlage nach Anspruch 1 oder 2, dadurch gekennzeichnet, daß der Schwenkarm (4) an eine vertikal stehende, um sich selbst drehende Nabe (7) angeordnet ist, und der Schwenkarm (4) derart horizontal drehbar ist, daß die Nabe (7) in eine zentrale Stellung oberhalb der Waage (1) bringbar ist.

4. Anlage nach Anspruch 3, dadurch gekennzeichnet, daß der an dem Schwenkarm (4) angeordnete Dreharm (8) für die Außer-Betrieb-Stellung automatisch durch Sensoren in eine parallele Stellung zum Schwenkarm (4) gebracht wird.

5. Anlage nach Anspruch 4, dadurch gekennzeichnet, daß der Dreharm (8) einstellbare, zur Waage hin gerichtete Düsen (8b, 8d) aufweist.

6. Anlage nach Anspruch 3, dadurch gekennzeichnet, daß die Nabe (7) durch einen Getriebemotor (13) angetrieben wird.

7. Anlage nach einem der Ansprüche 3-6, dadurch gekennzeichnet, daß an der Nabe (7) mindestens ein Dreharm (8a) kleineren Querschnitts angebracht ist, der der Zuführung von Reinigungsflüssigkeit dient.

8. Anlage nach einem der Ansprüche 3-7, dadurch gekennzeichnet, daß an der Nabe (7) mindestens ein Dreharm (8c) größeren Querschnitts angebracht ist, der der Zuführung von Trocknungsluft dient.

9. Anlage nach Anspruch 1, dadurch gekennzeichnet, daß jeweils mindestens eine Ringdüse (9) für die Reinigungsflüssigkeit und eine (10) für die Trocknungsluft vorgesehen ist.

10. Anlage nach einem der Ansprüche 3-9, dadurch gekennzeichnet, daß die Nabe (7) so ausgebildet ist, daß gleichzeitig Reinigungsflüssigkeit in einen Dreharm (8a) und Luft in einen anderen Dreharm (8c) geleitet werden kann.

11. Anlage nach Anspruch 2, dadurch gekennzeichnet, daß über der Schwingförderrinne (2) zu deren Reinigung mindestens ein um eine Längsachse drehbarer Rohrdüsenstock (11) für Reinigungsflüssigkeit und/oder Trocknungsluft angebracht ist.

12. Anlage nach Anspruch 11, dadurch gekennzeichnet, daß der Rohrdüsenstock (11) um ca. 45° schwenkbar angeordnet ist.

13. Anlage nach den Ansprüchen 5 und 11, dadurch gekennzeichnet, daß die am Dreharm (8a; 8c) angeordneten Düsen (8b; 8d), die Ringdüsen (9; 10) und der Rohrdüsenstock (11) zum Durchblasen von Preßluft ausgelegt sind.

14. Anlage nach Anspruch 3, dadurch gekennzeichnet, daß der Schwenkarm (4) aus einem Rohr mit Hohlquerschnitt besteht.

15. Anlage nach Anspruch 14, dadurch gekennzeichnet, daß in dem Rohr des Schwenkarms (4) eine Heizwendel (6) angeordnet ist und daß ein Ventilator (5) an der Einlaßseite des Schwenkarms (4) vor der Heizwendel (6) angebracht ist.

16. Anlage nach Anspruch 3, dadurch gekennzeichnet, daß der Schwenkarm (4) mit einer drehbar angeordneten Schwingförderrinne (2) so gekoppelt ist, daß bei Betrieb der Waage (1) die Schwingförderrinne (2) oder der Schwenkarm (4) mittig über die Waage (1) geschwenkt ist.

17. Anlage nach einem der vorhergehenden Ansprüche, dadurch gekennzeichnet, daß sie mit einer automatisch regulierbaren Flüssigkeitspumpe zur Dosierung des Waschwassers mit flüssigem Reinigungsmittel ausgestattet ist.

18. Anlage nach einem der vorhergehenden Ansprüche, dadurch gekennzeichnet, daß sie mit einer Wasserpumpe ausgestattet ist, die den üblichen Wasserdruck der Leitungsnetze auf die gewünschte Stärke erhöht.

19. Anlage nach einem der vorhergehenden Ansprüche, dadurch gekennzeichnet, daß die Prozeßsteuerung mehrere vorprogrammierte Reinigungsprogramme enthält.

20. Anlage nach Anspruch 4, wobei zumindest zwei Waagen (1) auf einer gemeinsamen Bühne (18) angeordnet sind, dadurch **gekennzeichnet**, daß die Anlage so beweglich angeordnet ist, daß sie nacheinander zu den einzelnen Waagen (1) zu deren Reinigung geführt werden kann.

21. Anlage nach Anspruch 20, dadurch **gekennzeichnet,** daß der Schwenkarm (4) auf einem von Hand oder automatisch an einem Bühnengeländer oder am Bühnenboden verschiebbaren Wagen (19) angebracht ist.

22. Anlage nach Anspruch 21, dadurch **gekennzeichnet**, daß die Produktzuführeinrichtungen (2) der jeweiligen Waagen beim Reinigungsvorgang so weit zurückgezogen werden, daß der Dreharm (8) in bezug auf die jeweiligen Produktzuführeinrichtungen (2) frei beweglich ist.

23. Anlage nach Anspruch 22, dadurch **gekennzeichnet,** daß über den jeweiligen zurückgezogenen Produktzuführeinrichtungen (2) zu deren Reinigung mindestens ein um eine Längsachse drehbarer Rohrdüsenstock (11) für Reinigungsflüssigkeit und/oder Trockenluft angebracht ist.

24. Anlage nach Anspruch 23, dadurch **gekennzeichnet,** daß der jeweilige Rohrdüsenstock (11) mit der übrigen Reinigungsanlage betrieblich verbunden ist.

## Claims

1. Cleaning and drying apparatus on a combination weighing machine, which combination weighing machine can be monitored and controlled by an automatic process control system, wherein
- the cleaning and drying apparatus comprises a rotating arm (8) which corresponds approximately in shape to the outer contour of the weighing machine (1) and is arranged on a pivot arm pivotable in a horizontal plane and by which cleaning fluid and/or drying air are applied to the weighing machine;
- in the interior of the weighing machine (1) is mounted at least one ring nozzle (9, 10) which conducts cleaning fluid and/or drying air from the inside to the outside;
- the cleaning and drying apparatus can be controlled with the aid of the automatic process control system at the end of the regular daily production time or between the ending and restarting of the operation of the combination weighing machine (1); and
- the process control system of the weighing machine (1) contains a programme with which during the cleaning process all the storage and weighing containers arranged on the weighing machine (1) are opened and closed regularly.

2. Apparatus as claimed in claim 1, characterised in that the weighing machine (1) is assigned to a product feeding device (2), in particular a vibrating conveyor trough, and/or a packaging machine (12), and the apparatus is designed for the simultaneous cleaning of the product feeding device (2) and/or the packaging machine (12).

3. Apparatus as claimed in claim 1 or 2, characterised in that the swinging arm (4) is mounted on a vertically extending hub (7) which rotates about its own axis and the swinging arm (4) is horizontally rotatable in such manner that the hub (7) can be brought into a central position above the weighing machine (1).

4. Apparatus as claimed in claim 3, characterised in that for the out-of-operation setting the rotating arm (8) arranged on the swinging arm (4) is brought automatically by sensors into a position parallel to the swinging arm (4).

5. Apparatus as claimed in claim 4, characterised in that the rotating arm (8) comprises adjustable nozzles (8b, 8d) directed towards the weighing machine.

6. Apparatus as claimed in claim 3, characterised in that the hub (7) is driven by a gear motor (13).

7. Apparatus as claimed in one of claims 3-6, characterised in that at least one rotating arm (8a) of smaller cross-section, which serves to supply cleaning fluid, is arranged on the hub (7).

8. Apparatus as claimed in one of claims 3-7, characterised in that at least one rotating arm (8c) of larger cross-section, which serves to supply drying air, is arranged on the hub (7).

9. Apparatus as claimed in claim 1, characterised in that at least one ring nozzle (9) for the cleaning fluid and one ring nozzle (10) for the drying air are provided.

10. Apparatus as claimed in one of claims 3-9, characterised in that the hub (7) is designed in such manner that simultaneously cleaning fluid can be conveyed into one rotating arm (8a) and air into another rotating arm (8c).

11. Apparatus as claimed in claim 2, characterised in that at least one tubular nozzle assembly (11) for cleaning fluid and/or drying air, which can be rotated about a longitudinal axis, is arranged above the vibrating conveyor trough (2) for the cleaning thereof.

12. Apparatus as claimed in claim 11, characterised in that the tubular nozzle assembly (11) is arranged so that it can be swivelled by approximately 45°.

13. Apparatus as claimed in claims 5 and 11, characterised in that the nozzles (8b; 8d) arranged on the rotating arm (8a; 8c), the ring nozzles (9; 10) and the tubular nozzle assembly (11) are designed for the blowing through of compressed air.

14. Apparatus as claimed in claim 3, characterised in that the swinging arm (4) consists of a tube of hollow cross-section.

15. Apparatus as claimed in claim 14, characterised in that a heater coil (6) is arranged in the tube of the swinging arm (4) and that a fan (5) is arranged on the inlet side of the swinging arm (4) in advance of the heater coil (6).

16. Apparatus as claimed in claim 3, characterised in that the swinging arm (4) is coupled to a rotatably mounted vibrating conveyor trough (2) in such manner that when the weighing machine (1) is in operation the vibrating conveyor trough (2) or the swinging arm (4) is swung centrally over the weighing machine (1).

17. Apparatus as claimed in one of the preceding claims, characterised in that it is equipped with an automatically adjustable fluid pump for dosing the washing water with fluid cleaning agent.

18. Apparatus as claimed in one of the preceding claims, characterised in that it is equipped with a water pump which increases the normal water pressure of the supply system to the desired strength.

19. Apparatus as claimed in one of the preceding claims, characterised in that the process control system contains a plurality of pre-programmed cleaning programmes.

20. Apparatus as claimed in claim 4, wherein at least two weighing machines (1) are arranged on a common platform (18), characterised in that the apparatus is arranged to be moveable in such manner that it can be conveyed consecutively to the individual weighing machines (1) for the cleaning thereof.

21. Apparatus as claimed in claim 20, characterised in that the swinging arm (4) is arranged on a carriage (19) which is displaceable on a platform railing or on the platform base manually or automatically.

22. Apparatus as claimed in claim 21, characterised in that during the cleaning process the product feeding devices (2) of the respective weighing machines are drawn back to such an extent that the rotating arm (8) is freely moveable in relation to the respective product feeding devices (2).

23. Apparatus as claimed in claim 22, characterised in that at least one tubular nozzle assembly (11) for cleaning fluid and/or drying air which is rotatable about a longitudinal axis is arranged above the respective, drawn back product feeding devices (2) for the cleaning thereof.

24. Apparatus as claimed in claim 23, characterised in that the respective tubular nozzle assembly (11) is operationally connected to the rest of the cleaning apparatus.

## Revendications

1. Installation de nettoyage et de séchage d'une balance combinée, cette balance combinée pouvant être commandée et contrôlée par des moyens automatiques, dans laquelle
- l'installation de nettoyage et de séchage comporte un bras pivotant dans un plan horizontal et portant un bras rotatif (8) épousant sensiblement la forme du contour externe de la balance (1), permettant d'amener le liquide de nettoyage et/ou l'air de séchage sur la balance;
- à l'intérieur de la balance (1), il y a au moins une buse annulaire (9, 10) permettant d'amener le liquide de nettoyage et/ou de l'air de séchage, de l'intérieur vers l'extérieur;
- l'installation de nettoyage et de séchage comporte des moyens de commande automatique permettant leur mise en oeuvre automatique, à la fin de la production journalière normale de l'installation de la balance combinée (1) ou après la fin d'une opération et avant la reprise d'une autre opération suivante; et
- la commande de la balance (1) comporte un programme grâce auquel, durant le processus de nettoyage, tous les dispositifs d'alimentation et récipients de pesée de la balance (1) sont ouverts et fermés périodiquement.

2. Installation selon la revendication 1, caractérisée en ce que la balance (1) est associée à un dispositif d'amenée de produit (2), en particulier une goulotte de transport vibrante, et/ou à une machine d'emballage (12), et l'installation étant conçue pour opérer simultanément le nettoyage du dispositif d'amenée de produit (2) et/ou de la machine d'emballage (12).

3. Installation selon la revendication 1 ou 2, caractérisée en ce qu'un bras pivotant (4), est disposé sur un moyeu rotatif (7), vertical et tournant autour de lui-même, et en ce que le bras pivotant (4) est susceptible de tourner horizontalement, de telle façon que le moyeu (7) soit susceptible d'être placé en une position centrale, au-dessus de la balance (1).

4. Installation selon la revendication 3, caractérisée en ce que, pour la position hors service, le bras rotatif (8) disposé sur le bras pivotant (4) est placé automatiquement en une position parallèle au bras pivotant (4), au moyen de capteurs.

5. Installation selon la revendication 4, caractérisée en ce que le bras rotatif (8) présente des buses (8b, 8d) réglables, orientées vers la balance.

6. Installation de nettoyage selon la revendication 3, caractérisée en ce que le moyeu (7) est entraîné au moyen d'un moto-réducteur (13).

7. Installation selon l'une des revendications 3-6, caractérisée en ce que, sur le moyeu (7) est monté au moins un bras rotatif (8a) de moindre section transversale, qui sert à l'amenée de liquide de nettoyage.

8. Installation selon l'une des revendications 3-7, caractérisée en ce que, sur le moyeu (7) est monté au moins un bras rotatif (8c) de plus grande section transversale, qui sert à l'amenée d'air de séchage.

9. Installation de nettoyage selon la revendication 1, caractérisée en ce qu'est chaque fois prévue au moins une buse annulaire (9), pour le liquide de nettoyage et une buse annulaire (10) pour l'air de séchage.

10. Installation selon l'une des revendications 3-9, caractérisée en ce que le moyeu (7) est réalisé de telle façon qu'il peut y avoir amenée simultanée du liquide de nettoyage dans un bras rotatif (8a) et d'air dans un autre bras rotatif (8c).

11. Installation selon la revendication 2, caractérisée en ce qu'au moins une rampe à buses tubulaires (11), susceptible de tourner autour d'un axe longitudinal, destinée au liquide de nettoyage et/ou à l'air de séchage, est montée au-dessus de la goulotte de transport vibrante (2), en vue de son nettoyage.

12. Installation selon la revendication 11, caractérisée en ce que la rampe à buses tubulaires (11) est disposée de façon à pouvoir pivoter d'à peu près 45°.

13. Installation de nettoyage selon les revendications 5 et 11, caractérisée en ce que les buses (8b; 8d) disposées sur le bras rotatif (8a;8c), les buses annulaires (9; 10) et la rampe à buses tubulaires (11) sont conçues pour le soufflage d'air comprimé.

14. Installation selon la revendication 3, caractérisée en ce que le bras pivotant (4) est composé d'un tube à section transversale creuse.

15. Installation selon la revendication 14, caractérisée en ce qu'une hélice de chauffage (6) est disposée dans le tube du bras pivotant (4) et en ce qu'un ventilateur (5) est monté du côté admission du bras pivotant (4), en amont de l'hélice de chauffage (6).

16. Installation selon la revendication 3, caractérisée en ce que le bras pivotant (4) est couplé à la goulotte de transport vibrante (2) montée à rotation, de telle façon que pendant le fonctionnement de la balance (1), la goulotte de transport vibrante (2) ou le bras pivotant (4) pivotant autour du centre au-dessus de la balance (1).

17. Installation selon l'une des revendications précédentes, caractérisée en ce qu'elle est équipée d'une pompe à liquide à régulation automatique, en vue du dosage d'un liquide de nettoyage dans l'eau de lavage.

18. Installation selon l'une des revendications précédentes, caractérisée en ce qu'elle est équipée d'une pompe à eau, qui augmente à la valeur voulue la pression d'eau usuelle des réseaux de distribution d'eau.

19. Installation selon l'une des revendications précédentes, caractérisée en ce que la commande de processus contient plusieurs programmes de nettoyage pré-programmés.

20. Installation selon la revendication 4, où au moins deux balances (1) sont disposées sur une plateforme (18) commune, caractérisée en ce que l'installation est disposée mobile, de telle façon qu'elle puisse être guidée vers les différentes balances (1) en vue d'opérer leur nettoyage.

21. Installation selon la revendication 20, caractérisée en ce que le bras pivotant (4) est monté sur une chariot (19) déplaçable manuellement ou automatiquement sur une passerelle ou sur le sol de la plateforme.

22. Installation selon la revendication 21, caractérisée en ce que, lors du processus de nettoyage, les dispositifs d'amenée de produit (2) des différentes balances sont reculés de façon suffisante pour que le bras rotatif (8) soit librement mobile par rapport aux dispositifs d'amenée de produit (2) respectifs.

23. Installation selon la revendication 22, caractérisée en ce qu'au moins une rampe à buses tubulaires (11), pour le liquide de nettoyage et/ou l'air de séchage, susceptible de tourner autour d'un axe longitudinal, est montée au-dessus des dispositifs d'amenée de produit (2) respectifs rétractés, en vue de leur nettoyage.

24. Installation selon la revendication 23, caractérisée en ce que chaque rampe à buses tubulaires (11) est reliée fonctionnellement au reste de l'installation.
